# FASCICULE DE BREVET EUROPEEN

(11) **EP 0 978 703 B1**
(45) Date de publication et mention de la délivrance du brevet: **02.04.2003**
(21) Numéro de dépôt: 99401954.5
(22) Date de dépôt: 30.07.1999
(51) Int. Cl.: F28G 1/08, B08B 1/00, B23P 9/00, F28G 1/14

(54) **Calibrage d'alvéoles de plaques intermédiaires d'échangeurs tubulaires**
Kalibrierung von Löchern in Zwischenplatten in Wärmetauscher
Calibration of holes in intermediate plates of tubular heat exchangers

(30) Priorité: 04.08.1998 FR 9810002
(43) Date de publication de la demande: 09.02.2000
(73) Titulaire: Sarl Munch, 54390 Frouard (FR)
(72) Inventeur: Zimmermann, Christian, 88390 Darnieulles-Gironcourt (FR)
(74) Mandataire: Bérogin, Francis

(56) Documents cités:
- US-A- 4 257 819
- US-A- 4 511 407
- US-A- 4 597 282
- US-A- 4 715 203

## Description

L'invention concerne un dispositif de recalibrage des alvéoles des plaques intermédiaires d'échangeurs tubulaires.

On sait que les échangeurs thermiques tubulaires, tels que des condenseurs, réchauffeurs, etc...comprennent des faisceaux de tubes parallèles parcourus par un fluide caloporteur, et supportés, entre des simples ou doubles plaques alvéolées d'entrée et de sortie de l'échangeur dans lesquelles les tubes sont retenus par simple ou double dudgeonnage, par des plaques intermédiaires alvéolées, dont les alvéoles sont traversées par les tubes.

En cours d'exploitation d'un tel échangeur thermique, une calamine très dure se forme entre la paroi des alvéoles et les tubes les traversant, et cette calamine diminue le diamètre des alvéoles cylindriques, de section circulaire, et n'autorise pas le passage de tubes neufs dans de bonnes conditions, après enlèvement des tubes usagés.

Entre les phases de détubage et de retubage de l'échangeur, il est donc nécessaire de recalibrer des alvéoles au diamètre nominal et initial auquel les alvéoles ont été alésées.

Afin d'éliminer la calamine, il est connu d'utiliser des alésoirs pour recalibrer les alvéoles à la demande.

Mais l'utilisation d'alésoirs s'est avérée difficile, dangereuse pour le personnel d'exécution, et procure un résultat peu performant quant à l'état de surface obtenu (facettes dans la paroi de l'alvéole et martelage du métal de la plaque intermédiaire entourant l'alvéole réalésée).

US-A-4,715,203 décrit un outil pour déformer « à froid » le métal d'une plaque métallique entourant un trou ménagé dans cette plaque, afin de recevoir ultérieurement un rivet ou organe d'assemblage analogue, pour la fixation de composants métalliques, notamment en aéronautique.

Cette déformation « à froid » consiste en une déformation plastique du matériau autour du trou, afin d'améliorer sa résistance aux concentrations de contraintes autour du trou, après l'assemblage par rivet, du fait que cette déformation plastique s'effectue à une température inférieure à la température de recuit du métal.

Cette déformation plastique entraîne nécessairement la formation d'un trou à un diamètre supérieur à son diamètre interne initial, à l'aide d'un actionneur linéaire muni d'une tige actionnée en va-et-vient et supportant une bague cylindrique, en matériau dur, dont le diamètre externe est calibré à un diamètre légèrement supérieur au diamètre initial du trou, et qui est engagée et déplacée axialement dans l'alvéole à calibrer.

Mais ce document ne décrit ni ne suggère un dispositif pour effectuer le recalibrage d'alvéoles à leur diamètre interne initial, par élimination de la calamine par repoussage à l'aide d'une bague, dont le diamètre externe est calibré au diamètre interne initial des alvéoles.

Le problème à la base de l'invention est de proposer un procédé de recalibrage de telles alvéoles, qui remédie aux inconvénients du procédé connu de réalésage, et qui, d'une manière générale, convient mieux aux diverses exigences de la pratique.

Un but de l'invention est de proposer un dispositif pratique, simple et économique pour réaliser le recalibrage d'alvéoles à leur diamètre interne initial sans présenter les inconvénients précités liés à l'utilisation connue d'alésoirs.

A cet effet, l'invention propose un dispositif de recalibrage d'alvéoles de plaques intermédiaires d'échangeurs tubulaires, dans lesquels de la calamine se forme, en cours d'exploitation des échangeurs, entre des tubes des échangeurs et des alvéoles cylindriques traversées par lesdits tubes, dans des plaques intermédiaires des échangeurs, cette calamine devant être retirée, après enlèvement des tubes usagés, pour recalibrer les alvéoles avant remise en place de tubes neufs, le dispositif étant caractérisé en ce qu'il comprend au moins un actionneur linéaire muni d'une tige actionnée en va-et-vient et supportant au moins une bague cylindrique, en un matériau dur, dont le diamètre externe est calibré au diamètre interne initial d'au moins une alvéole à recalibrer, de sorte que la bague est apte à être engagée et déplacée axialement dans ladite alvéole à recalibrer pour éliminer par repoussage la calamine obturant partiellement ladite alvéole, l'actionneur linéaire étant un vérin hydraulique à double effet, dont une tige de piston a une extrémité, externe à un corps du vérin, qui se fixe sur un porte-outil, sur lequel se monte ladite bague.

L'invention propose donc d'éliminer la calamine dans une alvéole par un repoussage, conduit comme un poinçonnage, à l'aide d'une bague calibrée introduite et déplacée axialement dans l'alvéole, qui retrouve ainsi sa section initiale.

Afin de bénéficier dans de bonnes conditions de la puissance du repoussage ou poinçonnage nécessaire, assuré hydrauliquement, le dispositif est avantageusement tel qu'un guide-pilote, de forme générale cylindro-conique, se monte également sur ledit porte-outil, et est engagé dans l'alvéole avant la bague par la manoeuvre du vérin et guide l'engagement de la bague dans l'alvéole, pour l'enlèvement de la calamine.

Pour faciliter le montage axial du guide-pilote et de la bague sur le porte-outil, lui-même monté coaxialement à la tige du piston et en bout de cette tige, le guide-pilote et la bague sont avantageusement empilés coaxialement et fixés sur le porte-outil par une vis axiale, qui traverse le guide-pilote et la bague et est vissée dans le porte-outil.

Pour éviter que l'actionneur (le vérin hydraulique) doive être supporté par un support massif, permettant d'éviter le recul de l'actionneur lorsque ce dernier pousse sa tige et la bague en position d'engagement et de déplacement axial dans une alvéole à recalibrer ou calibrer, il est avantageux que le dispositif comprenne de plus des moyens d'accrochage de l'actionneur, permettant l'accrochage sur la plaque intermédiaire dont une alvéole est à recalibrer.

Selon une réalisation avantageusement simple, ces moyens d'accrochage comprennent au moins deux griffes, de préférence réglables, reliées par leur pied au corps de l'actionneur et destinées à être engagées par leur tête dans des alvéoles situées de part et d'autre d'une alvéole à recalibrer, de sorte à prendre appui contre la face de la plaque intermédiaire du côté opposé à l'actionneur.

Pour favoriser un bon accrochage sur la plaque intermédiaire, les griffes sont avantageusement montées pivotantes par leur pied, chacune autour d'un axe sensiblement perpendiculaire à l'axe de la tige de l'actionneur, sur une embase solidaire du corps de l'actionneur, et les griffes sont rapprochées élastiquement l'une de l'autre par des moyens de rappel élastique, vers une position d'accrochage sur la plaque intermédiaire.

Après l'accrochage du dispositif sur une plaque intermédiaire et recalibrage d'une alvéole de cette plaque, pour faciliter le décrochage du dispositif d'une manière simple, il est avantageux que les griffes présentent chacune au moins une butée, de préférence sensiblement en pan incliné, destinée à coopérer avec au moins une butée d'écartement, sensiblement tronconique, solidaire en déplacement de la tige de l'actionneur, de sorte que ladite butée d'écartement repousse lesdites butées des griffes et écarte les griffes les unes des autres, contre les moyens de rappel élastique, et en position de décrochage de la plaque intermédiaire, lors du déplacement de la tige et de la bague, à leur retour vers leur position intiale, c'est-à-dire en général vers l'actionneur. En effet, il est avantageusement simple que l'actionneur pousse la bague dans l'alvéole à recalibrer, et non pas tire la bague dans l'alvéole.

Dans ce dernier cas, il faut en effet que l'actionneur prenne appui par des pieds contre la face de la plaque intermédiaire en regard de l'actionneur, que la tige de l'actionneur soit déplacée pour traverser l'alvéole, et que la bague soit montée sur l'extrémité libre de la tige, de l'autre côté de l'alvéole, pour que, par traction sur la tige, la bague puisse être tirée dans une alvéole à recalibrer.

Ce mode opératoire, qui est possible, est toutefois moins avantageux que celui qui consiste à pousser la bague dans une alvéole à recalibrer, car il nécessite un démontage et un remontage de la bague pour chaque alvéole, ce qui rallonge considérablement l'opération.

Comme l'actionneur est un vérin hydraulique à double effet, il est avantageux que la butée d'écartement soit sur le porte-outil, et l'embase supportant les griffes à pivotement est avantageusement fixée sur un nez de vérin, traversé par la tige et obturant le corps du vérin à son extrémité tournée vers la plaque intermédiaire.

Comme mentionné ci-dessus, les griffes sont de préférence réglables, notamment en ce qui concerne leur ouverture ou écartement les unes des autres à rencontre des moyens élastiques de rappel. Ceci est avantageusement obtenu par le fait que les points de liaison des pieds des griffes au corps de l'actionneur sont réglables axialement. Il en résulte un écartement réglable, plus ou moins important, des griffes les unes des autres lors du retour de la tige de l'actionneur vers sa position initiale, en particulier par la coopération de la butée d'écartement avec les butées en pan incliné des griffes, dans l'exemple préféré précité.

Dans cet exemple, il est alors avantageux que la position axiale de l'embase sur le nez de vérin soit réglable, notamment par vissage de l'embase autour d'un manchon fileté du nez de vérin, avec immobilisation en rotation de l'embase sur ledit nez de vérin, en position axiale réglée, grâce à une vis radiale par exemple. Il en résulte une adaptation du dispositif aux différents cas d'entraxes entre alvéoles contiguës d'une même plaque intermédiaire ou de différentes plaques intermédiaires.

Pour effectuer un repoussage efficace de la calamine, la bague utilisée est de préférence en carbure ou en un acier rapide.

D'autres avantages et caractéristiques de l'invention ressortiront de la description donnée ci-dessous, à titre non limitatif, d'un exemple préféré de réalisation, représenté sur les dessins annexés sur lesquels :
- la figure 1 représente, en partie en élévation latérale et en partie en coupe axiale, un dispositif de recalibrage de l'invention, en position accrochée sur une plaque intermédiaire pour le recalibrage d'une alvéole sur la demi-vue de droite de la figure 1, et en position de décrochage de la plaque intermédiaire après recalibrage de l'alvéole sur la demi-vue de gauche,
- la figure 2 est une vue éclatée, en partie en coupe axiale et en partie en élévation latérale, d'éléments du dispositif de la figure 1, et
- la figure 3 est une vue schématique en plan de l'embase des griffes d'accrochage du dispositif des figures 1 et 2.

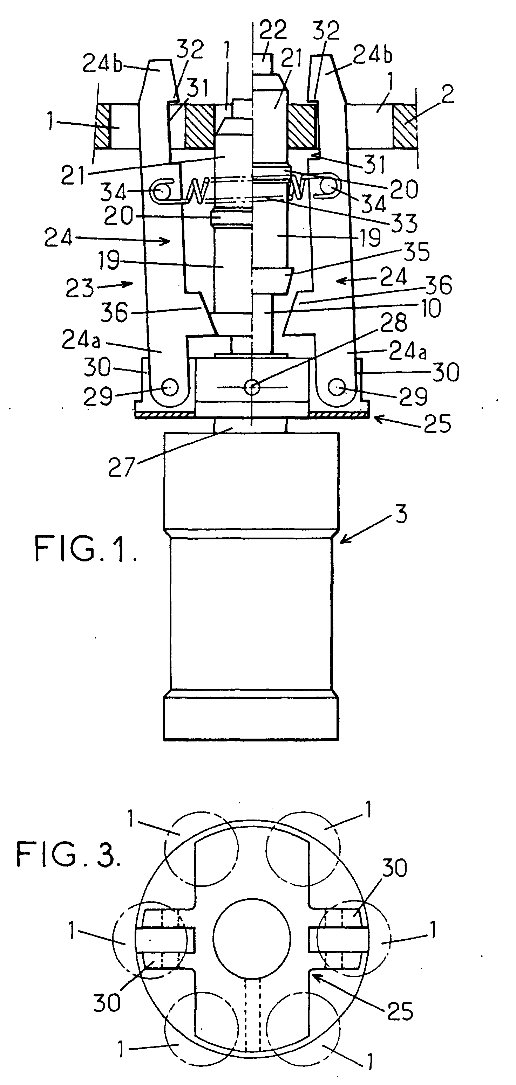

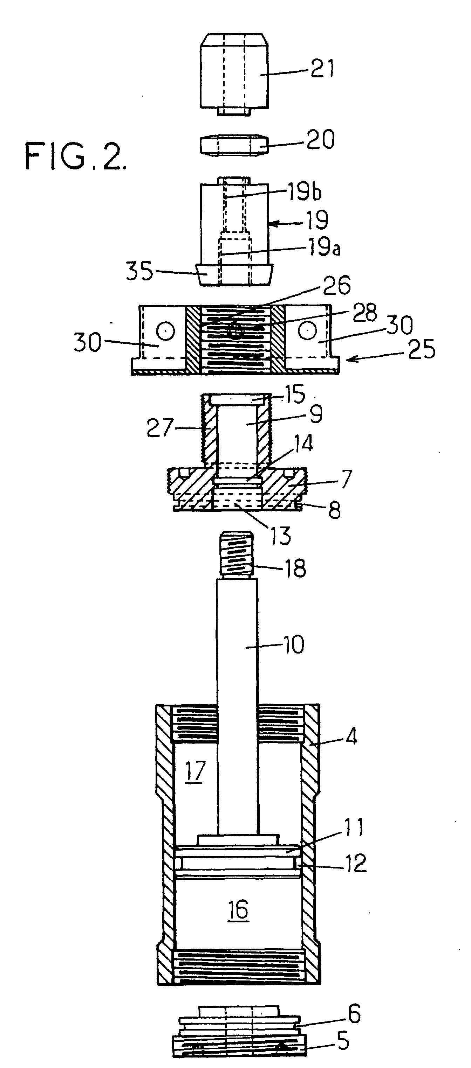

Le dispositif de recalibrage des figures 1 à 3 est destiné à recalibrer à son diamètre nominal initial, une alvéole 1 cylindrique de section circulaire alésée dans une plaque intermédiaire 2 d'un échangeur thermique tubulaire, après enlèvement d'un tube usagé qui traversait préalablement cette alvéole 1, et alors qu'une calamine, qui s'est formée entre ce tube usagé et la paroi de l'alvéole 1 et qui obture donc partiellement cette alvéole 1 dont elle réduit le diamètre, doit être éliminée pour permettre la mise en place d'un tube neuf.

Le dispositif de recalibrage comprend un vérin hydraulique à double effet 3, de structure classique bien connue, dont le corps de vérin 4 cylindrique tubulaire est fermé de manière étanche à une extrémité par un fond 5 ou bouchon, vissé dans le corps 4 et garni d'un joint d'étanchéité torique (non représenté) dans une gorge périphérique 6 du fond 5. Un nez de vérin 7 est vissé dans l'autre extrémité du corps de vérin 4 et garni, à sa périphérie, d'un joint d'étanchéité torique (non représenté) dans sa gorge 8, et ce nez 7 présente un alésage central 9, coaxial au corps 4 et traversé avec étanchéité par une tige axiale 10 solidaire, par une extrémité interne au corps 4 d'un piston 11, monté coulissant avec étanchéité dans le corps 4 à l'aide d'un joint d'étanchéité torique (non représenté) logé dans la gorge 12 du piston 11.

La traversée étanche du nez de vérin 7 par la tige 10 est assurée par des bagues d'étanchéité (non représentées) logées dans différentes portions 13, 14, 15, de diamètre élargi, de l'alésage central 9 du nez 7, notamment aux deux extrémités axiales de cet alésage 9.

De manière classique, le piston 11 délimite dans le corps 4, entre le fond 5 et le nez 7, deux chambres hydrauliques de travail 16 et 17, qui sont alternativement remplies et vidées de fluide hydraulique sous pression pour déplacer axialement le piston 11 et la tige 10 par rapport au corps 4, l'alimentation hydraulique du vérin 3 étant réalisée, de manière classique, par des orifices (non représentés) dans le corps 4 et à partir d'une centrale hydraulique commandant le vérin 3 à distance et pilotée par exemple par énergie électrique à basse tension.

L'extrémité filetée 18 de la tige 10, à l'extérieur du corps 4, est vissée dans un alésage coaxial taraudé 19a d'un porte-outil tubulaire 19, adapté aux caractéristiques dimensionnelles rencontrées, et en particulier au diamètre des alvéoles 1. Sur ce porte-outil 19, fixé sur l'extrémité libre de la tige 10, une bague 20 en matériau très dur, par exemple en carbure ou en acier rapide, et un guide-pilote 21, de forme cylindro-conique, sont empilés et fixés coaxialement par une vis axiale 22, dont la tige filetée traverse des alésages centraux alignés et coaxiaux dudit guide-pilote 21 et de la bague 20 et est vissée dans un alésage taraudé 19b du porte-outil 19.

La bague 20 a son diamètre externe calibré au diamètre initial nominal des alvéoles 1, et le diamètre externe de la bague 20, qui est donc le diamètre de recalibrage des alvéoles 1, est supérieur au diamètre du porte-outil 19 ainsi que du guide-pilote 21, qui, lorsque le vérin 3 est commandé dans le sens de la sortie de sa tige 10, est engagé dans une alvéole 1 à recalibrer avant la bague 20, et guide cette dernière pour son engagement dans cette alvéole 1.

Le guide-pilote 21 et la bague 20 ou pastille, qui constitue l'outil, sont ainsi poussés axialement par le vérin 3 dans une alvéole 1 à recalibrer, et la bague 20 enlève la calamine obturant partiellement cette alvéole 1 comme par poinçonnage, par l'engagement et le déplacement de la bague 20 dans l'alvéole 1.

Pour éviter le recul du vérin 3 lorsque la bague 20 vient en contact, à la sortie de la tige 10, avec le dépôt de calamine dans l'alvéole 1, le vérin 3 est accroché à la plaque intermédiaire 2 par un mécanisme d'accrochage 23 comportant essentiellement deux griffes 24 et une embase 25. L'embase 25 est vissée, en position axiale réglable, par un alésage central taraudé 26 autour d'un embout 27 cylindrique tubulaire et extérieurement fileté du nez de vérin 7, et sur lequel l'embase 25 est immobilisée en rotation par une vis radiale 28, dans la position de réglage axial désirée, correspondant à l'entraxe des alvéoles 1. Chacune des deux griffes 24, en opposition ou face-à-face, est montée pivotante par son pied 24a autour d'un axe de pivot 29, sensiblement perpendiculaire à l'axe longitudinal commun du vérin 3 et de sa tige10 ainsi que du porte-outil 19, de la bague 20 et du guide-pilote 21, cet axe de pivot 29 étant retenu dans les deux branches d'une chape radiale 30, ouverte vers l'extérieur, et ménagée latéralement sur l'embase 25.

Les têtes 24b des deux griffes 24 sont chanfreinées pour s'engager plus facilement chacune dans l'une de deux alvéoles 1 situées de part et d'autre de l'alvéole 1 à recalibrer, et des encoches 31, ménagées dans les faces des têtes 24b tournées l'une vers l'autre, délimitent sur ces têtes 24b des crochets 32 qui permettent aux griffes 24 de s'accrocher sur la face de la plaque intermédiaire 2 qui est tournée du côté opposé au vérin 3, et autour de l'alvéole 1 à recalibrer, comme représenté sur la moitié de droite de la figure 1.

Les griffes 24 sont élastiquement rapprochées l'une de l'autre par des ressorts 33, par exemple des ressorts hélicoïdaux de compression, dont les extrémités sont accrochées sur des porte-ressorts 34, traversant les griffes 24 entre leur pied 24a et leur tête 24b et parallèlement aux axes de pivot 29. On peut ainsi prévoir deux ressorts 33 s'accrochant chacun sur les extrémités des porte-ressorts 34 dépassant d'un côté ou de l'autre des deux griffes 24. Ces ressorts 33 rappellent élastiquement les griffes 24 l'une vers l'autre en position d'accrochage sur la plaque intermédiaire 2, et la forme et la disposition des griffes 24, et en particulier de leurs encoches 31, permettent un bon centrage du dispositif de recalibrage sur l'axe de l'alvéole 1 à recalibrer.

Ainsi, le vérin 3 prend, grâce aux griffes 24, appui sur la plaque intermédiaire 2 pour pousser axialement la bague 20 dans l'alvéole 1 à recalibrer et pour ainsi enlever la calamine comme par poinçonnage.

Après que la bague 20 a redonné à l'alvéole 1 son diamètre initial, permettant le montage ultérieur d'un tube neuf, la rentrée de la tige 10 dans le corps de vérin 4 commande la sortie de la bague 20 et du guide-pilote 21 hors de l'alvéole 1 recalibrée, et au cours de ce mouvement, une butée d'écartement 35, de forme tronconique convergent vers le corps de vérin 4 et ménagée sur la base du porte-outil 19, repousse des butées 36, en pan incliné, et, éventuellement, en portion de surface tronconique, en saillie sur les griffes 24 et vers l'axe du dispositif, c'est-à-dire dans le volume délimité entre les griffes 24. Les butées 36 des griffes 24 sont inclinées sensiblement dans la même direction que la butée d'écartement tronconique 35 du porte-outil 19, de sorte que la rentrée de la tige 10 dans le vérin 3 commande l'écartement des griffes 24 l'une des l'autre par la butée 35, qui repousse les butées 36 des griffes 24. Ces dernières sont ainsi écartées l'une de l'autre à l'encontre des ressorts de rappel 33, et cet écartement des griffes 24 permet de dégager leurs crochets 32 de l'appui sur la plaque intermédiaire 2 et de dégager les têtes 24b des griffes 24 des alvéoles 1 dans lesquels elles étaient engagées.

Pour convenir à différentes tailles d'alvéoles 1, et éventuellement à différents entraxes entre les alvéoles 1, les griffes 24 sont réglables au niveau notamment de leur rappel élastique par les ressorts 33 et surtout de leur écartement par les butées 35 et 36, en particulier par le réglage axial, par vissage, de la position de l'embase 25 sur l'embout ou manchon 27 fileté du nez de vérin 7, ce qui permet d'adapter l'écartement des griffes 24 aux différentes valeurs d'entraxes entre alvéoles 1 contiguës d'une même plaque intermédiaire 2 ou de plaques intermédiaires différentes.

Grâce au dispositif de recalibrage de l'invention, on comprend qu'il est aisé de repousser la calamine dans les alvéoles 1 et de recalibrer ces alvéoles 1 à leur diamètre initial, pour permettre le retubage dans de bonnes conditions.

## Revendications

1. Dispositif de recalibrage d'alvéoles (1) de plaques intermédiaires (2) d'échangeurs tubulaires, dans lesquels de la calamine se forme, en cours d'exploitation des échangeurs, entre des tubes des échangeurs et des alvéoles cylindriques (1), traversées par lesdits tubes, dans des plaques intermédiaires (2) des échangeurs, cette calamine devant être retirée, après enlèvement de tubes usagés, pour calibrer les alvéoles (1) avant remise en place de tubes neufs, **caractérisé en ce qu'**il comprend au moins un actionneur linéaire (3) muni d'une tige (10) actionnée en va-et-vient et supportant au moins une bague cylindrique (20), en un matériau dur, dont le diamètre externe est calibré au diamètre interne d'au moins une alvéole (1) à calibrer, de sorte que la bague (20) est apte à être engagée et déplacée axialement dans ladite alvéole (1) à recalibrer pour éliminer par repoussage la calamine obturant partiellement ladite alvéole (1), l'actionneur linéaire étant un vérin hydraulique (3) à double effet, dont une tige (10) de piston (11) a une extrémité (18), externe à un corps (4) du vérin, qui se fixe sur un porte-outil (19), sur lequel se monte ladite bague (20).

2. Dispositif selon la revendication 1, **caractérisé en ce qu'**un guide-pilote (21), de forme générale cylindro-conique, se monte également sur ledit porte-outil (19), et est engagé dans l'alvéole (1) avant la bague (20) par la manoeuvre du vérin (3), et guide l'engagement de la bague (20) dans l'alvéole (1).

3. Dispositif selon la revendication 2, **caractérisé en ce que** le guide-pilote (21) et la bague (20) sont empilés coaxialement et fixés sur le porte-outil (19) par une vis axiale (22) qui traverse le guide-pilote (21) et la bague (20) et est vissée dans le porte-outil (19).

4. Dispositif selon l'une quelconque des revendications 1 à 3, **caractérisé en ce qu'**il comprend de plus des moyens (23) d'accrochage de l'actionneur (3).

5. Dispositif selon la revendication 4, **caractérisé en ce que** lesdits moyens (23) d'accrochage comprennent au moins deux griffes (24) reliées par leur pied (24a) au corps (4) de l'actionneur (3) et destinées à être engagées par leur tête (24b) dans des alvéoles (1) situées de part et d'autre d'une alvéole (1) à recalibrer, de sorte à prendre appui contre la face de la plaque intermédiaire (2) du côté opposé à l'actionneur (3).

6. Dispositif selon la revendication 5, **caractérisé en ce que** les griffes (24) sont montées pivotantes par leur pied (24a), chacune autour d'un axe (29) sensiblement perpendiculaire à l'axe de la tige (10) de l'actionneur (3), sur une embase (25) solidaire du corps (4) de l'actionneur (3), et les griffes (24) sont rapprochées élastiquement l'une de l'autre par des moyens (33) de rappel élastique, vers une position d'accrochage sur la plaque intermédiaire (2).

7. Dispositif selon la revendication 6, **caractérisé en ce que** les griffes (24) présentent chacune au moins une butée (36) sensiblement en pan incliné, destinée à coopérer avec au moins une butée d'écartement (35), sensiblement tronconique, solidaire en déplacement de la tige (10) de l'actionneur (3), de sorte que ladite butée d'écartement (35) repousse lesdites butées (36) des griffes (24) et écarte les griffes (24) les unes des autres, contre les moyens de rappel élastique (33), et en position de décrochage de la plaque intermédiaire (2), lors du déplacement de la tige (10) et de la bague (20) vers l'actionneur (3).

8. Dispositif selon la revendication 7, **caractérisé en ce que** ladite butée d'écartement (35) est sur le porte-outil (19), et l'embase (25) supportant les griffes (24) à pivotement est fixée sur un nez (7) de vérin, traversé par la tige (10) et obturant le corps (4) du vérin à son extrémité tournée vers la plaque intermédiaire (2).

9. Dispositif selon la revendication 8, **caractérisé en ce que** l'embase (25) se fixe en position axiale réglable sur ledit nez de vérin (7), de sorte à régler l'écartement des griffes (24) les unes des autres au retour de la tige (10) vers sa position initiale, pour adapter le dispositif aux entraxes des alvéoles (1) contiguës d'une même plaque intermédiaire (2) ou de différentes plaques intermédiaires.

10. Dispositif selon l'une quelconque des revendications 1 à 9, **caractérisé en ce que** ladite bague (20) est en carbure ou en acier rapide.

## Claims

1. A device for re-calibrating holes (1) in intermediate plates (2) of shell and tube exchangers, in which scale forms, during operation of the exchangers, between tubes of the exchangers and cylindrical holes (1), through which said tubes pass, in intermediate plates (2) of the exchangers, this scale having to be removed, after worn tubes have been taken out, in order to calibrate the holes (1) before new tubes are fitted, **characterised in that** it comprises at least one linear actuator (3) provided with a rod (10) actuated in a to-and-fro movement and supporting at least one cylindrical ring (20), made of a hard material, whose outside diameter is calibrated to the inside diameter of at least one hole (1) to be calibrated, so that the ring (20) is suitable for engaging and moving axially in said hole (1) to be re-calibrated in order to remove by pushing the scale partially blocking said hole (1), the linear actuator being a double-acting hydraulic cylinder (3), of which a rod (10) of piston (11) has an end (18), external to a body (4) of the cylinder, which is fixed on a tool holder (19), on which said ring (20) is fitted.

2. A device according to claim 1, **characterised in that** a pilot guide (21), of general cylindro-conical shape, is also fitted on said tool holder (19), and is engaged in the hole (1) before the ring (20) by the operation of the cylinder (3), and guides the engagement of the ring (20) in the hole (1).

3. A device according to claim 2, **characterised in that** the pilot guide (21) and the ring (20) are piled coaxially and fixed on the tool holder (19) by an axial screw (22) which goes through the pilot guide (21) and the ring (20) and is screwed into the tool holder (19).

4. A device according to any of claims 1 to 3, **characterised in that** it comprises in addition means (23) for hooking the actuator (3).

5. A device according to claim 4, **characterised in that** said hooking means (23) comprise at least two claws (24) connected by their foot (24a) to the body (4) of the actuator (3) and designed to be engaged by their head (24b) in holes (1) located on either side of a hole (1) to be re-calibrated, so as to rest against the face of the intermediate plate (2) on the side opposite the actuator (3).

6. A device according to claim 5, **characterised in that** the claws (24) are fitted pivoting by their foot (24a), each about a pin (29) substantially perpendicular to the axis of the rod (10) of the actuator (3), on a base (25) rigidly linked to the body (4) of the actuator (3), and the claws (24) are brought elastically nearer to each other by spring return means (33), towards a hooking position on the intermediate plate (2).

7. A device according to claim 6, **characterised in that** the claws (24) each have at least one stop (36) substantially with a slanting corner, designed to co-operate with at least one moving-away stop (35), substantially truncated, rigidly linked when it moves to the rod (10) of the actuator (3), so that said moving-away stop (35) pushes said stops (36) of the claws (24) and moves the claws (24) away from each other, against the spring return means (33), and into an unhooking position from the intermediate plate (2), at the time of the movement of the rod (10) and of the ring (20) towards the actuator (3).

8. A device according to claim 7, **characterised in that** said moving-away stop (35) is on the tool holder (19), and the base (25) supporting the pivoting claws (24) is fixed on a cylinder nose (7), through which the rod (10) passes and blocking the body (4) of the cylinder at its end turned towards the intermediate plate (2).

9. A device according to claim 8, **characterised in that** the base (25) is fixed in an adjustable axial position on said cylinder nose (7), so as to adjust the moving away of the claws (24) from each other on the return of the rod (10) towards its initial position, in order to adapt the device to suit the centre distances of the adjoining holes (1) in the same intermediate plate (2) or in various intermediate plates.

10. A device according to any of claims 1 to 9, **characterised in that** said ring (20) is made of carbide or of high speed steel.

## Patentansprüche

1. Einrichtung zur Nachkalibrierung von Waben (1) von Zwischenplatten (2) von röhrenförmigen Wärmetauschern, in welchen sich während des Betriebs der Wärmetauscher Zunder ausbildet zwischen den Rohren der Wärmetauscher und den zylindrischen Waben (1) in den Zwischenplatten (2) der Wärmetauscher, die von den Rohren durchquert werden, wobei dieser Zunder nach dem Ausbau der gebrauchten Röhren herausgezogen werden muss, um die Waben (1) vor dem Einbau von neuen Rohren zu kalibrieren, **dadurch gekennzeichnet, dass** die Einrichtung zumindest einen linearen Aktor (3) aufweist, der mit einer Stange (10) versehen ist, die hin und her bewegbar ist und zumindest einen zylindrischen Ring (20) aus einem harten Material hält, dessen Außendurchmesser auf den Innendurchmesser von zumindest einer zu kalibrierenden Wabe (1) kalibriert ist, und zwar so, dass der Ring (20) in dieser nachzukalibrierenden Wabe (1) axial in Eingriff bringbar und verschiebbar ist, um den Zunder, der diese Wabe (1) teilweise verschließt, durch Heraustreiben zu entfernen, wobei der lineare Aktor ein Hydraulikzylinder (3) mit doppeltem Effekt ist, der eine Stange (10) eines Kolbens (11) mit einem Ende (18), außerhalb eines Körpers (4) des Zylinders, aufweist, das an einem Werkzeugträger (19) anbringbar ist, auf welchem der Ring (20) anbringbar ist.

2. Einrichtung nach Anspruch 1, **dadurch gekennzeichnet, dass** ein Führungsbolzen (21), der eine im wesentlichen zylindrokonische Form hat, ebenfalls auf dem Werkzeugträger (19) anbringbar ist und in der Wabe (1) durch die Betätigung des Zylinders (3) vor dem Ring (20) im Eingriff ist und den Eingriff des Rings (20) in der Wabe (1) führt.

3. Einrichtung nach Anspruch 2, **dadurch gekennzeichnet, dass** der Führungsbolzen (21) und der Ring (20) koaxial gestapelt sind und auf dem Werkzeugträger (19) mittels einer axialen Schraube (22) befestigt sind, die den Führungsbolzen (21) sowie den Ring (20) durchquert und in den Werkzeugträger (19) hineingeschraubt ist.

4. Einrichtung nach einem der Ansprüche 1 bis 3, **dadurch gekennzeichnet, dass** sie außerdem Mittel (23) zum Aufhängen des Aktors (3) aufweist.

5. Einrichtung nach Anspruch 4, **dadurch gekennzeichnet, dass** die Mittel (23) zum Aufhängen zumindest zwei Haken (24) aufweisen, die an ihrem Fuß (24a) mit dem Körper (4) des Aktors (3) verbunden sind und dazu bestimmt sind, mit ihrem Kopf (24b) in den Waben (1) in Eingriff zu geraten, die sich auf beiden Seiten der nachzukalibrierenden Wabe (1) befinden, um gegen die Fläche der Zwischenplatte (2) auf der dem Aktor (3) gegenüberliegenden Seite anzustoßen.

6. Einrichtung nach Anspruch 5, **dadurch gekennzeichnet, dass** die Haken (24) schwenkbar an ihrem Fuß (24a), jeweils um eine Achse (29) herum, die im wesentlichen senkrecht zur Achse der Stange (10) des Aktors (3) verläuft, an einer Basis (25) angebracht sind, die Teil des Körpers (4) des Aktors (3) ist, und dass die Haken (24) einander elastisch durch elastische Betätigungsmittel (33) angenähert sind, in Richtung einer Position der Aufhängung an der Zwischenplatte (2).

7. Einrichtung nach Anspruch 6, **dadurch gekennzeichnet, dass** die Haken (24) jeweils zumindest einen Anschlag (36) mit schräger Kante aufweisen, dazu bestimmt, mit zumindest einem Abstandsanschlag (35) zusammenzuwirken, der kegelstumpfförmig ausgestaltet ist und sich zusammen mit der Stange (10) des Aktors (3) bewegt, und zwar so, dass der Abstandsanschlag (35) gegen die Anschläge (36) der Haken (24) drückt und die Haken (24) weiter auseinander bringt, gegen die elastischen Betätigungsmittel (33), und in eine Position zum Abhängen von der Zwischenplatte (2), bei der Bewegung der Stange (10) und des Rings (20) in Richtung des Aktors (3).

8. Einrichtung nach Anspruch 7, **dadurch gekennzeichnet, dass** der Abstandsanschlag (35) sich auf dem Werkzeugträger (19) befindet und die Basis (25), die die Haken (24) schwenkbar lagert, an einem Vorderteil (7) des Zylinders befestigt ist, der von der Stange (10) durchquert wird und den Körper (4) des Zylinders an seinem in Richtung der Zwischenplatte (2) weisenden Ende verdeckt.

9. Einrichtung nach Anspruch 8, **dadurch gekennzeichnet, dass** die Basis (25) in axiale einstellbare Position an dem Vorderteil des Zylinders (7) anbringbar ist, so dass der Abstand der Haken (24) voneinander bei der Rückkehr der Stange (10) in ihre Ursprungsposition einstellbar ist, um die Einrichtung an den Mittenabstand von einander benachbarten Waben (1) einer Zwischenplatte (2) oder unterschiedlicher Zwischenplatten anzupassen.

10. Einrichtung nach einem der Ansprüche 1 bis 9, **dadurch gekennzeichnet, dass** der Ring (20) aus Carbid oder Schnellarbeitsstahl besteht.
